# EUROPEAN PATENT SPECIFICATION

(11) **EP 0 288 479 B1**
(45) Date of publication and mention of the grant of the patent: **31.03.1993**
(21) Application number: 87901242.5
(22) Date of filing: 29.01.1987
(51) Int. Cl.: G06F 13/16

(54) **APPARATUS AND METHOD FOR PROVIDING DISTRIBUTED CONTROL IN A MAIN MEMORY UNIT OF A DATA PROCESSING SYSTEM**
VORRICHTUNG UND VERFAHREN FÜR DAS VORSEHEN EINER VERTEILTEN STEUERUNG IN DEM HAUPTSPEICHER EINES DATENVERARBEITUNGSSYSTEMS
PROCEDE ET APPAREIL DE COMMANDE DECENTRALISEE DANS L'UNITE DE MEMOIRE CENTRALE D'UN SYSTEME DE TRAITEMENT DE DONNEES

(30) Priority: 29.01.1986 US 823687
(43) Date of publication of application: 02.11.1988
(73) Proprietor: DIGITAL EQUIPMENT CORPORATION, Maynard Massachusetts 01754-1418 (US)
(72) Inventor: NATUSCH, Paul, J., Westford, MA 01886 (US); YU, Eugene, L., Cupertino, CA 95014 (US); SENERCHIA, David, C., Shrowsbury, MA 01545 (US); HENRY, John F., deceased (US)
(74) Representative: Goodman, Christopher
(86) International application number: US8700185
(87) International publication number: WO8704825

(56) References cited:
- DE-A- 2 537 787
- US-A- 3 343 140
- US-A- 4 245 303

## Description

### BACKGROUND OF THE INVENTION

### 1. Field of the Invention

This invention relates generally to data processing systems and more particularly to the main memory unit storing the signal groups required for the current operation of the data processing system. The present invention provides for distributed control in the main memory unit as contrasted with the centralization of the memory unit control function in typical data processing subsystems.

### 2. Description of the Related Art

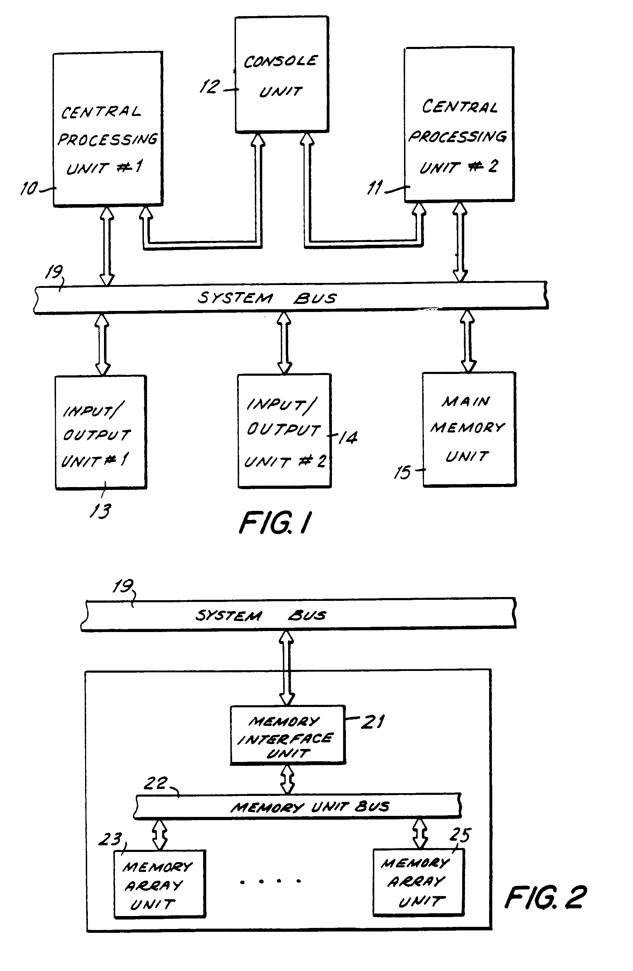

Referring to Figure 1, a typical data processing system configuration is shown. The data processing system includes at least one central processing unit 10 ( or 11), at least one input/output device 13 (or 14), a memory unit 15 and a system bus 19 coupling the plurality of units or subsystems of the data processing system. The central processing unit processes groups of logic signals according to software and/or firmware instructions. The logic signal groups to be processed as well as the currently executing program are typically stored in the memory unit 15. A console unit 12 can be coupled to the central processing unit(s) and includes the apparatus and stored instructions to initialize the system. The console unit 12 can also act as a terminal during the operation of the data processing system. The input/output unit(s) 13 (or 14) provide the interface to the remainder of the data processing system to terminal units, mass storage units, communication units, and any other units to be coupled to the data processing system. The detailed function of the units coupled to the system bus is less important than the fact that these units operate autonomously and communicate with the remainder of the data processing units by means of the system bus. In particular, the system bus is used to store signal groups into and to retrieve signal groups from the memory subsystem by the other subsystems.

Referring next to Figure 2, a block diagram of a typical main memory subsystem 15 found in the related art is shown. The main memory unit 15 includes a memory interface unit 21 that exchanges signals with the system bus 19. The memory interface unit 21 is coupled to an array bus 22 and the array bus 22 has at least one memory array unit 23 coupled thereto. The memory array units 23 (through 25) are comprised of a plurality of logic signal storage elements organized in groups so that each group of storage elements can be accessed by a unique address logic signal group. The memory interface unit 21 includes the apparatus for controlling the exchange of logic signal groups, identified by an address logic signal group, between the memory array units 23 through 25 and the system bus 19. The memory interface unit 21 includes apparatus for identifying signal activity on the system bus 19 directed to the memory unit 15 as well as apparatus for returning logic signal groups to the subsystems transmitting requests for the signal groups. Buffering of the data signal groups, error correction and generation of control signal are also typically performed in the memory interface unit 21 in the related art.

The foregoing main memory architecture limits the amount of activity that can be performed in the main memory subsystem, because the activity must be performed under the control of the memory interface unit 21, to a single activity unless parallel apparatus is included for simultaneous processing of a plurality of signal groups.

A need has therefore been felt for apparatus and method of operation for the main memory subsystem that can permit a multiplicity of simultaneous operations involving the memory subsystem. This requirement is particularly stringent in the computer systems referred to as "write through" data processing systems in which each group of data signals from the central processing system is immediately stored or written into the main memory subsystem. The memory activity resulting from this type of data processing system requirement can result in performance deterioration unless the memory subsystem is designed to accommodate the increased activity.

In prior art document DE-A-2537787 there is disclosed a data processing system incorporating data processing units and a memory system coupled by a bus where the memory system comprises a plurality of sub-modules each of which can process data simultaneously, controlled by an array control unit. The present invention as defined herein offers distinct advantages over this system in the particular provision of an interface unit and the operation of status and control signals.

### SUMMARY OF THE INVENTION

It is an object of the present invention to provide an improved data processing unit.

It is a further object of the present invention to provide an improved main memory subsystem for a data processing system.

It is yet another object of the present invention to provide a plurality of storage cell arrays in a main memory subsystem, each array capable of functioning independently of the other storage cell arrays.

It is a still further object of the present invention to provide an array unit bus, wherein a plurality of storage cell arrays are coupled to the array unit bus and wherein an interface unit couples the array unit bus with the system bus.

The aforementioned and other objects are accomplished, according to the present invention, by providing a memory board for operation in a main memory unit including a plurality of other memory boards, said memory board comprising:
storage means for processing data signals by storing and retrieving said data signals in response to address signals concurrently with said other memory boards in said main memory unit, said storage means including
a plurality of memory array units each including a plurality of storage cells for processing said data signals at locations corresponding to said address signals, and means for processing said data signals in response to said address and command signals to effect storage of said data signals into and retrieval of said data signals from said storage cells concurrently with the processing of said data signals by other of said memory array units, and
characterised in that
said processing means includes sequencer means for generating array status signals including at least a done signal indicating the impending availability of that memory array unit to process said data signals, said memory board further comprising
board interface means including an array interface unit for generating board status signals from said done signals,
said board status signals including
ready/done signals being generated prior to the time when said storage cells have completed their processing operations and indicating the impending completion of said storage means processing of data signals, and
send no command signals indicating the availability of said memory board to process said data signals;
and array bus means coupled to said plurality of memory array units for transferring said command, data, and address signals and said done signals between said array interface unit and each of said plurality of memory array units.

These and other features of the present invention will be understood upon reading of the following description along with the drawings.

### BRIEF DESCRIPTION OF THE DRAWINGS

FIG. 1 is a block diagram of the components of a data processing system capable of utilizing the present invention.

FIG. 2 is a block diagram of a main memory unit typically provided in related data processing systems.

FIG. 3 is a block diagram of a main memory unit according to the present invention.

FIG. 4 is a block diagram of the apparatus providing the interface, in the main memory unit, between the memory boards and the data processing system.

FIG. 5 is a block diagram of apparatus comprising the memory boards according to the present invention.

### DETAILED DESCRIPTION OF THE PREFERRED EMBODIMENT

### 1. Detailed Description of the Figures

Figure 1 and Figure 2 have been previously described with reference to data processing systems of the related art.

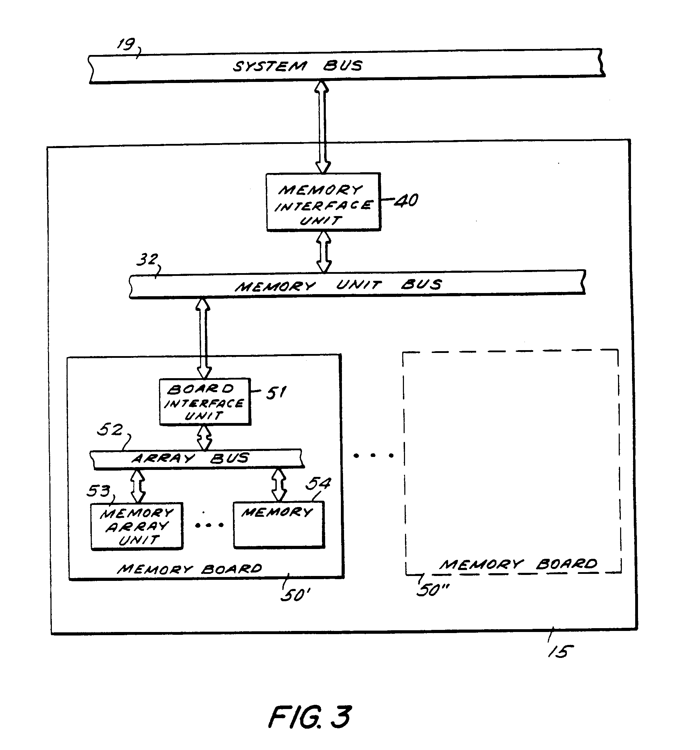

Referring next to Figure 3, the basic structure of the main memory subsystem 15 according to the present invention is shown. The main memory subsystem 15 includes a memory interface unit 40 that couples the main memory subsystem 15 to the system bus 19. The memory interface unit 40 is coupled to and exchanges signals with the memory unit bus 32. The memory unit bus 32, in turn, exchanges logic signal groups with a plurality of memory boards, memory boards 50' and 50'' shown as an example of the relationship of the memory boards with respect to the remainder of the main memory subsystem. Each memory board 50 includes a board interface unit 51 that exchanges logic signals with the memory unit bus 32. The board interface unit 51, in turn, exchanges groups of logic signals with array bus 52 on board 50, while an plurality of memory arrays units, 53 through 54, also on board 50, are coupled to the array bus 52.

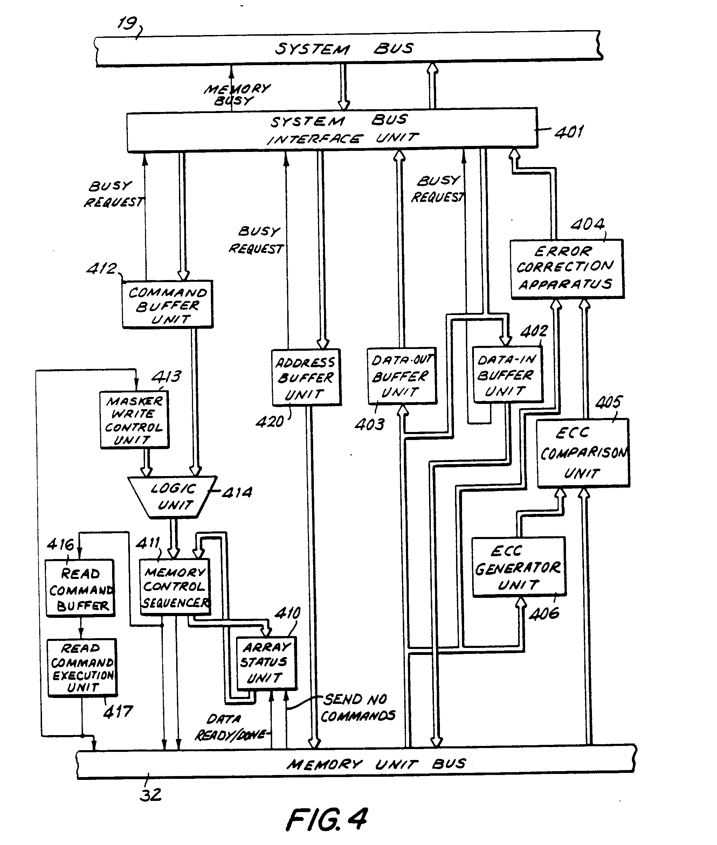

Referring next to Figure 4, a block diagram of the memory interface unit 40 is shown. A system bus interface unit 401 controls the exchange of signals, including control signals between the system bus and the rest of the main memory unit. Of particular interest is the control signal labelled Memory Busy. With respect to the logic signal groups representing data, the data-in buffer unit 402 provides a temporary storage for data signals to be stored in the memory arrays 53 through 54. From the data-in buffer unit 402, the data signal groups are transferred to the memory unit bus 32. The data-out buffer unit 403 provides a temporary storage for data signal groups from the main memory unit that are to be transferred to a subsystem requesting the signal groups. A data path for data signal groups via memory bus 32 from the memory arrays 53 through 54 to the data-in buffer 402 is provided for the masked write operation, i.e. an operation in which the data signal group at a predetermined location (address) is only partially replaced with data from other subsystems. ECC generator unit 406, ECC comparison unit 405 and error correction apparatus 404 are included to verify the accuracy of the data being transferred from the memory subsystem to another portion of the data processing system. The memory interface unit also includes an address buffer unit 420 for temporary storage of address signal groups of data signal groups being stored in or retrieved from the memory unit. The address buffer unit 420 is coupled to the system bus interface unit 401 and to the memory unit bus 32 to implement the transfer of address signal groups between the memory arrays 53 through 54 and the system bus 19.

Included in the memory interface unit 40 are also a multiplicity of units for controlling and monitoring the operation of the memory subsystem. The array status unit 410 receives signals from and applies signals to the memory control sequencer 411. The array status unit 410 also receives Data Ready/Done and Send No Command signals from the memory boards. The command buffer unit 412 provides a temporary storage for commands that are received from and applied to the system bus interface unit 401. The command buffer unit 412 also applies control signals to logic unit 414. Logic unit 414 also receives signals from the masked write control unit 413. The memory control sequencer 411 applies signals to the memory unit bus 32 and to the read command buffer 416 for temporary storage. The read command buffer 416 applies signals to the read command execution unit 417; the read command execution unit 417 in turn applies signals to the memory unit bus 32 and to the masked write control unit 413.

As stated above, the array status unit 410 receives Data Ready/Done signals and Send No Command signals from the memory arrays. The Send No Command signals are used to ensure that each array unit 53 through 54 is processing only one read command or a refresh operation. The Data Ready/Done signals are used to control status bits in the array status unit 410. The Data Ready/Done signals are asserted by the memory array prior to its being capable of processing another read operation, the data signal group having not been removed. The Send No Command signal is asserted and remains asserted prior to the assertion of the Data Ready/Done signal and remains asserted until the memory interface unit 40 has removed the data signal groups. Logic components (not shown) in the memory interface unit 40 ensure that the commands are not sent to the the memory arrays 53 through 54 between the time that the memory interface unit 40 begins removing the data signal group and completes the data signal group removal.

It will be clear that numerous interconnections between the components of the memory interface unit that are typically used by a memory interface unit and have a standard functionality have not been explicitly illustrated. However, several signal lines that are useful in the explanation of the operation of the present invention are specifically shown. Busy Request lines couple control signals from the data-in buffer unit 402, the address buffer unit 420, and the command buffer unit 412 to the system bus interface unit 401. The presence of appropriate signals on these lines can result in a Memory Busy signal being applied to the system bus 19 (i.e. for use with a system bus arbitration unit). Similarly, the array status unit 410 receives Data Ready/Done signals and Send No Command signals, described above, from the memory boards.

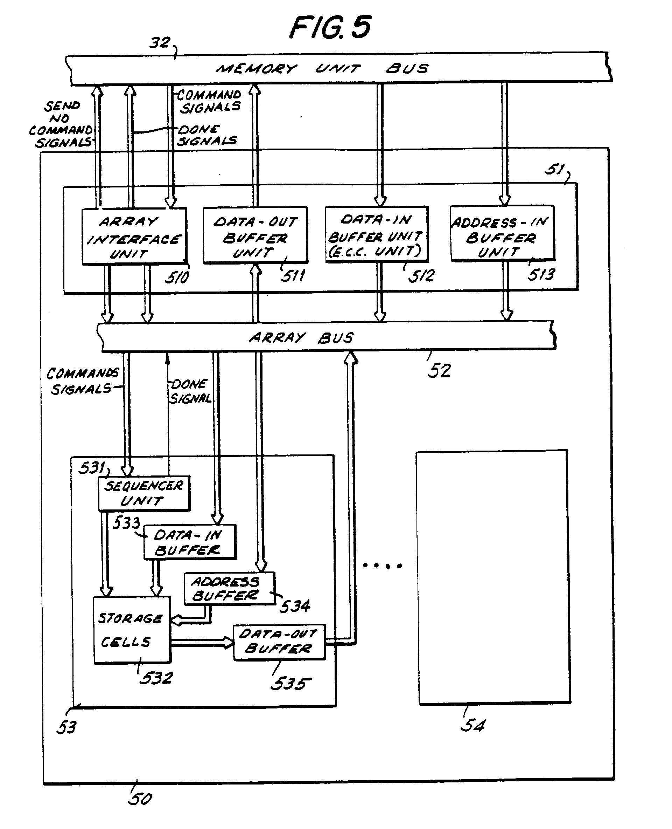

Referring next to Figure 5, the apparatus implementing the memory boards, e.g. 50, according to the present invention is shown. The board interface unit 51 includes an array interface unit 510 that receives command signals from the memory unit bus 32 and applies status signals to the memory unit bus 32. The array interface unit 510 applies command signals to the array bus 52 and receives (Done) status signals from the array bus. The board interface unit 51 also includes a data-out buffer unit 511 for temporary storage of data signal groups applied to the array bus from the memory arrays 53 through 54, an address-in buffer unit 513 for temporary storage of address signals to be applied to the array bus 52 and data-in buffer unit 512 for temporary storage of data signals to be stored in the storage cells of the array. The data-in buffer unit 512 also includes ECC bit generation apparatus for storage with the data signal group.

The memory array units 53 through 54, illustrated in Figure 5, each include a sequencer unit 531 for receiving commands from the array bus 52 and for applying status (Done) signals to the array bus 52. The sequencer unit 531 controls the operation of the associated array of storage cells 532 within the memory array unit in response to the command signals received from the array bus. The memory array unit also includes a data-in buffer unit 533 for temporary storage of signal groups to be stored in the storage cell array 532, an address buffer unit 534 for temporary storage of signals determining the location in the storage cell array 532 to be manipulated by the sequencer unit 531 and a data-out buffer unit 535 for temporary storage of the signal groups being retrieved from the storage cell array 532. In the preferred embodiment, the data-in lines and buffer are also used as the data-out lines and buffer.

### 2. Operation of the Preferred Embodiment

Referring once again to Figures 3 and 5, the storage cells comprising the memory array units 53 through 54 on a memory board are implemented in such a manner that the number of logic signals that are transferred in parallel on the system bus, sometimes designated as a word or longword, can be stored in a group of associated related storage cells in one of the memory array units. That is, the word or longword associated with an address signal group can be completely stored in the memory array unit responding to the associated address signal group so that each group of signals transferred on the system bus is related to a single memory array unit. The memory array units are typically implemented in a technology that is considerably slower than the technology implementing the remainder of the signal processing circuits of the data processing system. As a result, the time to perform an operation involving the array can occupy multiple system clock cycles. To minimize the impact of the relatively slow speed of the memory arrays, the addresses can be arranged so that each array contains an address that is in consecutive sequence with the addresses of other arrays on the board. Furthermore, the addresses of the boards are also adapted so that the same array will not receive a second address in a consecutive sequence of addresses until all the other arrays have been addressed.

In a typical embodiment, the memory unit can include 8 boards and each board can include 4 memory arrays. In this situation, each memory array can be adapted to respond to every 32^{nd} address in the consecutive memory array address sequence (wherein each memory address can be associated with a plurality of signal groups addressable by other subsystems of the data processing unit), although this capability may not be necessary in practice. However, the memory boards as described in the typical embodiment can support four write commands being processed simultaneously, or one read command being processed.

In the preferred embodiment, the address signal group can be applied to the arrays approximately three clock cycles after the address/command cycle is begun on the system bus. During this period of time, the determination is made in the memory interface unit 40 that the address signal group is valid, that a memory command is involved, and that the array unit that will process the command is available. Thus, the memory unit has the apparatus to transfer the signal groups to the appropriate array unit with sufficient rapidity so as not to limit the memory activity under normal circumstances.

The Busy Request signals can be generated by the command buffer unit 412, the address buffer unit 420 and the data-in buffer unit 402 when these units are in danger of being unable to process in-coming signal groups in an appropriate manner. The Busy Request signals are applied to the system interface unit 401 and the system interface unit can apply a Memory Busy signal to the system bus or to dedicated signal paths. In the preferred embodiment, the Memory Busy signal, generated as a result of an earlier transaction, may be used to inform a data processing subsystem that an attempted later transaction was not successful prior to the notification of such a result by the means of the Confirmation Busy signal. In this manner, the data processing subsystem can begin attempting to reinitiate the transaction sooner. The Memory Busy signal is also used to prevent the arbitration unit from awarding access to the system bus for a transaction that may not be successful.

It will be clear that control signals exchanged between memory boards 50 and the memory interface unit 40, which permit the memory arrays to function independently, similarly permit the boards 50 etc. to function independently from the other memory boards and from the memory interface unit itself. As a result, memory boards with arrays which operate at different speeds can be used interchangeably in the board positions of the memory unit 15 of the present invention.

The foregoing description is included to illustrate the operation of the preferred embodiment and is not meant to limit the scope of the invention. The scope of the invention is to be limited only by the following claims.

## Claims

1. A memory board (50) for operation in a main memory unit (15) including a plurality of other memory boards, said memory board (50) comprising:
storage means for processing data signals by storing and retrieving said data signals in response to address signals concurrently with said other memory boards in said main memory unit (15), said storage means including
a plurality of memory array units (53) each including
a plurality of storage cells (532) for processing said data signals at locations corresponding to said address signals, and means for processing said data signals in response to said address and command signals to effect storage of said data signals into and retrieval of said data signals from said storage cells (532) concurrently with the processing of said data signals by other of said memory array units (53), and
characterised in that
said processing means includes sequencer means (531) for generating array status signals including at least a done signal indicating the impending availability of that memory array unit (53) to process said data signals, said memory board (50) further comprising
board interface means (51) including an array interface unit (510) for generating board status signals from said done signals, said board status signals including
ready/done signals being generated prior to the time when said storage cells (532) have completed their processing operations and indicating the impending completion of said storage means' processing of data signals, and
send no command signals indicating the availability of said memory board (50) to process said data signals;
and array bus means (52) coupled to said plurality of memory array units (53) for transferring said command, data, and address signals and said done signals between said array interface unit (510) and each of said plurality of memory array units (53).

2. A main memory unit (15) including at least one memory board (50) according to claim 1, for processing data signals by storing and retrieving said data signals in response to requests from at least one data processing unit (10) which generates command signals and address signals as part of said requests to said main memory unit (15) and which receives memory status signals from said main memory unit (15) indicating the availability of said main memory unit (15) to process said data signals, said main memory unit (15) comprising:
memory interface unit means (40), coupled to said data processing system, for forming said memory status signals from said board status signals and for exchanging said data, command, memory status, and address signals with said data processing unit 10;
a memory unit bus (32) coupled to said memory interface unit (40) for transferring said address, data, board status and command signals with said memory interface unit means (40) of said at least one memory board (50), coupled to said memory unit bus (32) and responsive to said command signals.

3. A main memory unit (15) according to claim 2 wherein each board interface means (51) is coupled between said memory unit bus (32) and said array bus (52), for forming said board status signals for an associated memory board (50) from said array status signals.

4. A main memory unit (15) according to claim 2 wherein each of said memory array units (53) includes:
said plurality of storage cells (532);
buffer means (533), (534), (535) coupled between said plurality of storage cells (532) and said array bus (52), for providing temporary storage of said data signals (533, 535), and said address signals (534), and
sequencer means (531), coupled between said array bus (52) and said plurality of storage cells (532), for controlling processing of said storage cells (532) in accordance with said command signals received from said array bus (52) and for providing said array status signals to said array bus (52).

5. A main memory unit (15) according to claim 3 wherein said board interface means (51) further includes means (510-513) for temporarily storing said address, command, data and board status signals.

6. The main memory unit (15) of claim 2 wherein said memory interface unit means (40) includes:
data buffer unit means (402, 403) for temporarily storing said data signals,
address buffer unit means (420) for temporarily storing said address signals,
command buffer unit means (412) for temporarily storing said command signals, and
means for processing said memory status signals according to said board status signals.

7. The main memory unit (15) as defined in claim 2, wherein said array interface means (510) is adapted to receive command signals from said memory unit bus (32).

8. The main memory unit (15) as defined in claim 2, further comprising first and second memory array units (53), wherein each of said first and second memory array means comprises means for simultaneously writing data signal groups in storage cells (532) of said first and second memory array means.

9. A data processing system including at least one main memory unit according to any one of claims 2 to 6, and further comprising a system bus (19), wherein said at least one data processing unit (10) is coupled to said main memory unit (15) via said system bus (19).

10. The data processing system as defined in claim 9, wherein said at least one memory board (50) includes a first memory board the memory array means (53) of which operate at a first speed and a second memory board the memory array means of which operate at a second speed, said second speed being different than said first speed.

11. The data processing system as defined in claim 9, wherein said memory interface unit means (40) transmits a busy signal to said system bus (19) when said memory unit (15) is unable to process incoming data.

12. The data processing system according to any one of claims 9 to 11 wherein said system bus (19) is adapted to transfer data, address, memory status and command signals used in said data processing system.

13. The data processing system of claim 12 wherein said memory array units (53) are configured to store groups of said data signals, said groups of said data signals having the same number of bits as said system bus (19).

14. The data processing system of claim 12 wherein said data are stored at locations in said memory array units (53) corresponding to said address signals, and wherein consecutive ones of said locations are distributed over said plurality of memory array units (53).

15. The data processing system of claim 12 wherein said memory interface unit (40) also includes error detection and correction means (404) for detecting and correcting errors in said data signals.

16. The data processing system according to claim 12 further including an input/output unit (13) coupled to said system bus (19) for generating command and address signals for said main memory unit (15) and for transferring said data signals with said main memory unit (15).

17. The data processing system according to claim 12 wherein said at least one data processing unit includes a first central processing unit (10) and a second central processing unit (11) both coupled to said system bus (19).

18. A method for processing data signals in a main memory unit (15) of a data processing system by storing and retrieving said data signals, the method comprising the steps of:
generating command and address signals by said data processing unit (10) to be processed in said main memory unit (15) and exchanging said data, command, and address signals with said main memory unit (15) via a system bus (19);
transferring via a memory interface unit (40) said data, command and address signals between said system bus (19) and a memory unit bus (32);
transferring said data, command and address signals between said memory bus (32) and at least one memory board (50);
said method characterised by
processing said data signals in said at least one memory board (50) according to said command and data signals and concurrently with any other memory boards (50) in said main memory unit (15) other than said at least one memory board (50);
generating board status signals in each said memory board (50) including a ready/done signal generated prior to the time when said storage system processing means has completed its processing operations and indicating the impending completion of said storage system processing means' completion of its processing operations, and second signals indicating the current availability of the associated memory board to process said data signals;
transferring said board status signals to said memory interface unit (40);
forming memory status signals in said memory interface unit (40) from said board status signals, said memory status signals indicating the availability of the main memory unit (15) to process said data signals; and
transferring said memory status signals from said memory interface unit (40) to said data processing unit 10.

19. The method of claim 18 wherein the step of processing said data signals in said memory board (50) includes the substeps of:
transferring said command, data and address signals to a plurality of memory array units (53) in each said memory board (50) via an array bus (52) in each said memory board (50), each of said plurality of memory array units (53) in each said memory board (50) being coupled to the array bus (52) in that memory board (50),
processing said data signals in one of said memory array units (53) according to said command and data signals and concurrently with the processing of said data signals in others of said plurality of memory array units (53) in the same said memory board (50), and
generating in each of said plurality of memory array units (53) array status signals indicating the current availability of the associated memory array unit (53) to process said data signals; and wherein the step of generating said board status signals includes the step of forming said board status signals from said array status signals.

20. The method of claim 19 wherein the substep of processing said data signals in one of said memory array units (53) further includes the substeps of:
temporarily storing said data and address signals in said one memory array unit (53), and
controlling the processing of said data signals in said one memory array unit (53) in accordance with said command signals.

21. The method of claim 20 wherein the substeps of generating said array status signals further includes the substep of generating said array status signals to indicate the completion of a processing operation by the associated memory array unit (53), and
wherein the substep of generating said board status signals further includes the substep of generating said board status signals to indicate the completion of a processing operation by said associated memory board (50).

## Patentansprüche

1. Speicherplatine (50) zum Betrieb in einer Hauptspeichereinheit (115), die eine Vielzahl von weiteren Speicherplatinen enthält, wobei die Speicherplatine (50) aufweist:
eine Speichereinrichtung zum Verarbeiten von Datensignalen, indem die Datensignale in Reaktion auf Adreßsignale gleichzeitig zu den weiteren Speicherplatinen der Hauptspeichereinheit (15) gespeichert und gelesen werden, wobei die Speichereinrichtung aufweist
eine Vielzahl von Speicherfeldeinheiten (53), die jeweils eine Vielzahl von Speicherzellen (532) enthalten, zum Verarbeiten der Datensignale an Plätzen, die den Adreßsignalen entsprechen, und eine Einrichtung zum Verarbeiten der Datensiganle in Reaktion auf die Adreß- und Befehlssignale, um eine Speicherung der Datensignale in die Speicherzellen und ein Auslesen der Datensignale aus den Speicherzellen (532) gleichzeitig mit der Verarbeitung der Datensignale durch andere der Speicherfeldeinheiten (53) zu bewirken, und
dadurch gekennzeichnet, daß
die Verarbeitungseinrichtung eine Sequenzereinrichtung (531) zum Erzeugen von Feldstatussignalen enthält, die zumindest ein Durchführungsbestätigungssignal umfassen, das die bevorstehende Verfügbarkeit der Spelcherfeldeinheit (53) anzeigt, die Datensignale zu verarbeiten, wobei die Speicherplatine (50) weiterhin aufweist
eine Platinenschnittstelleneinrichtung (51), die eine Feldschnittstelleneinheit (510) zum Erzeugen von Platinenzustandssignalen aus den Durchführungsbestätigungssignalen enthält, wobei die Platinenstatussignale umfassen Fertig/Durchführungsbestätigungs-Signale, die vor dem Zeitpunkt erzeugt werden, wenn die Speicherzeilen (532) ihre Verarbeitungsoperationen abgeschlossen haben und den bevorstehenden Abschluß der Verarbeitung der Datensignale in der Speichereinrichtung anzeigen, und
Sende-Keinen-Befehl-Signale, die die Verfügbarkeit der Speicherplatinen (50) anzeigen, die Datensignale zu verarbeiten;
und eine Feldbuseinrichtung (52), die mit der Vielzahl von Speicherfeldeinheiten (53) zum Übertragen der Befehls-, Daten- und Adreß-Signale und der Durchführungsbestätigungssignale zwischen der Feldschnittstelleneinheit (510) und jeder aus der Vielzahl der Speicherfeldeinheiten (53) verbunden ist.

2. Hauptspeichereinheit (15), die zumindest eine Speicherplatine (50) gemäß Anspruch 1 enthält, zum Verarbeiten von Datensignalen, indem die Datensignale in Antwort auf Nachfragen von zumindest einer Datenverarbeitungseinheit (10) gespeichert und ausgelesen werden, die Befehls-Signale und Adreß-Signale als Teil dieser Nachfragen nach der Hauptspeichereinheit (15) erzeugt und die Speicherstatussignale von der Hauptspeichereinheit (15) empfängt, die die Verfügbarkeit der Hauptspeichereinheit (15) dazu anzeigen, Datensignale zu verarbeiten, wobei die Hauptspeichereinheit (15) aufweist:
eine Speicherschnittstelleneinheit (40), die mit dem Datenverarbeitungssystem verbunden ist, zum Erzeugen der Speicherstatussignale aus den Platinenstatussignalen und zum Austauschen der Daten-, Befehls-, Speicherzustands- und Adreßsignale mit der Datenverarbeitungseinheit (10); einen Speichereinheit-Bus (32), der mit der Speicherschnittstelleneinheit (40) zum Übertragen der Adreß-, Daten-, Platinenstatus- und Befehlssignale zu bzw. von den Speicherschnittstelleneinheit-Einrichtungen (40) der zumindest einen Speicherplatine (50), die mit dem Speichereinheit-Bus (32) verbunden sind und auf die Befehlssignale reagieren.

3. Hauptspeichereinheit (15) gemäß Anspruch 2, worin jede Platinenschnittstelleneinrichtung (51) zwischen dem Speichereinheit-Bus (32) und dem Feldbus (52) zum Erzeugen der Platinenstatussignale für eine zugeordnete Speicherplatine (50) aus den Feldstatussignalen verbunden ist.

4. Hauptspeichereinheit (15) gemäß Anspruch 2, worin jede der Speicherfeldeinheiten (53) enthält:
eine Vielzahl von Speicherzellen (532);
eine Puffereinrichtung (533), (534), (535), die zweischen der Vielzahl von Speicherzellen (532) und dem Feldbus (52) verbunden ist, zum Erzeugen einer einstweiligen Speicherung der Datensignale (533, 535) und der Adreß-Signale (534), und
eine Sequenzereinrichtung (531), die zwischen dem Feldbus (52) und der Vielzahl von Speicherzellen (532) verbunden ist, zum Steuern der Verarbeitung der Speicherzellen (532) in Übereinstimmung mit den Befehls-Signalen, die von dem Feldbus (52) empfangen werden, und zum Bereitstellen der Feldstatussignale an dem Feldbus (52).

5. Hauptspeichereinheit (15) gemäß Anspruch 3, worin die Platinenschnittstelleneinrichtung (51) weiterhin eine Einrichtung (510 bis 513) zum einstweiligen Speichern der Adreß-, Befehls-, Daten- und Platinenstatus-Signale enthält.

6. Hauptspeicherinheit (15) gemäß Anspruch 2, worin die Speicherschnittstelleneinheit-Einrichtung (40) enthält:
eine Datenpuffereinheit-Einrichtung (402, 403) zum zeitweiligen Speichern der Datensignale,
eine Adressenpuffereinheit-Einrichtung (420) zum zeitweiligen Speichern der Adreß-Signale,
eine Befehlspuffereinheit-Einrichtung (412) zum zeitweiligen Speichern der Befehlssignale und
eine Einrichtung zum Verarbeiten der Speicherstatussignale gemäß den Platinenstatussignalen.

7. Hauptspeichereinheit (15), wie in Anspruch 2 definiert, worin die Feldschnittstelleneinrichtung (510) dazu ausgelegt ist, Befehls-Signale von dem Speichereinheit-Bus (32) zu empfangen.

8. Hauptspeichereinheit (15), wie in Anspruch 2 definiert, die weiterhin erste und zweite Speicherfeldeinheiten (53) aufweist, wobei jede der ersten und zweiten Speicherfeldeinheiten eine Einrichtung zum simultanen Schreiben von Datensignalgruppen in die Speicherzellen (532) der ersten und zweiten Speicherfeldeinrichtungen aufweist.

9. Datenverarbeitungssystem, das zumindest eine Hauptspeichereinheit gemäß einem der Ansprüche 2 bis 6 und weiterhin einen Systembus (19) aufweist, wobei die zumindest eine Datenverarbeitungseinheit (10) mit der Hauptspeichereinheit (15) über den Systembus (19) verbunden ist.

10. Datenverarbeitungssystem, wie in Anspruch 9 definiert, worin die zumindest eine Speicherplatine (50) eine erste Speicherplatine aufweist,deren Speicherfeldeinrichtung (53) mit einer ersten Geschwindigkeit arbeitet, und eine zweite Speicherplatine enthält, deren Speicherfeldeinrichtung bei einer zweiten Geschwindigkeit arbeitet, wobei die zweite Geschwindigkeit zuder ersten Geschwindigkeit unterschiedlich ist.

11. Datenverarbeitungssystem, wie in Anspruch 9 definiert, worin die Speicherschnittstelleneinheit-Einrichtungen (40) ein Belegt-Signal an den Systembus (19) sendet, wenn die Speichereinheit (15) nicht in der Lage dazu ist, ankommende Daten zu verarbeiten.

12. Datenverarbeitungssystem gemäß irgendeinem der Ansprüche 9 bis 11, worin der Systembus (19) dazu ausgelegt ist, Daten-, Adreß-, Speicherstatus- und Befehls-Signale, die in dem Datenverarbeitungssystem verwendet werden, zu übertragen.

13. Datenverarbeitungssystem nach Anspruch 12, worin die Speicherfeldeinheiten (53) dazu ausgelegt sind, Gruppen von Datensignalen zu speichern, wobei die Gruppen von Datensignalen die gleiche Anzahl an Bits wie der Systembus (19) haben.

14. Datenverarbeitungssystem nach Anspruch 12, worin die Daten an Plätzen in den Speicherfeldeinheiten (53) gespeichert werden, die den Adreßsignalen entsprechen, und worin die nachfolgenden der Plätze über die Vielzahl der Speicherfeldeinheiten (53) verteilt sind.

15. Datenverarbeitungssystem nach Anspruch 12, worin die Speicherschnittstelleneinheit (40) auch eine Fehlerdetektions- und Korrektureinrichtung (404) zum Detektieren und Korrigieren von Fehlern der Datensignale enthält.

16. Datenverarbeitungssystem gemäß Anspruch 12, das weiterhin eine Eingangs/Ausgangseinheit (13) enthält, die mit dem Systembus (19) zum Erzeugen von Befehls- oder Adreß-Signalen für die Hauptspeichereinheit (15) und zum Übertragen der Datensignale zu bzw. von der Hauptspeichereinheit (15) verbunden ist.

17. Datenverarbeitungssystem gemäß Anspruch 12, worin die zumindest eine Datenverarbeitungseinheit eine erste zentrale Verarbeitungseinheit (10) und eine zweite zentrale Verarbeitungseinheit (11) enthält, die beide mit dem Systembus (19) verbunden sind.

18. Verfahren zum Verarbeiten von Datensignalen in einer Hauptspeichereinheit (15) eines Datenverarbeitungssystems durch Speichern und Lesen der Datensignale, wobei das Verfahren die folgenden Schritte aufweist:
Erzeugen von Befehls- und Adreß-Signalen durch die Datenverarbeitungseinheit (10), die in der Hauptspeichereinheit (15) verarbeitet werden sollen, und Austauschen der Daten-, Behehls- und Adreß-Signale mit der Hauptspeichereinheit (15) über einen Systembus (19); Übertragen der Daten-, Befehls- und Adreß-Signale zwischen dem Systembus (19) und einem Speichereinheit-Bus (32) über eine Speicherschnittstelleneinheit (40);
Übertragen der Daten-, Befehls- und Adreß-Signale zwischen dem Speicherbus (32) und zumindest einer Speicherplatine (50);
wobei das Verfahren gekennzeichnet ist durch
das Verarbeiten der Datensignale in der zumindest einen Speicherplatine (50) gemäß den Befehls- und Datensignalen und gleichzeitig mit irgendwelchen anderen Speicherplatinen (50) der Hauptspeichereinheit (15), die nicht der zumindest einen Speicherplatine (50) entsprechen; Erzeugen von Platinenstatussignalen auf jeder Speicherplatine (50), die ein Fertig/Durchführungsbestätigungs-Signal enthalten, das vor dem Zeitpunkt erzeugt wird, wenn die Speichersystem-Verarbeitungseinrichtung ihre Verarbeitungsoperationen abgeschlossen hat und den bevorstehenden Abschluß der Verarbeitungsoperationen der Speichersystem-Verarbeitungseinrichtung anzeigt, und die zweite Signale enthalten, die die gegenwärtige Verfügbarkeit der zugeordneten Speicherplatine dafür anzeigt, die Datensignale Zu verarbeiten;
Übertragen der Platinenstatussignale zu der Speicherschnittstelleneinheit (40);
Erzeugen von Speicherstatussignalen in der Speicherschnittstelleneinheit (40) aus den Platinenstatussignalen, wobei die Speicherstatussignale die Verfügbarkeit der Hauptspeichereinheit (15) dafür anzeigen, Datensignale zu verarbeiten; und
Übertragen der Speicherstatussignale von der Schnittstelleneinheit (40) zu der Datenverarbeitungseinheit (10).

19. Verfahren nach Anspruch 18, worin der Schritt des Verarbeitens der Datensignale auf der Speicher-Platine (50) die folgenden Unterschritte aufweist:
Übertragen der Befehls-, Daten- und Adreß-Signale zu der Vielzahl von Speicherfeldeinheiten (53) jeder der Speicherplatinen (50) über einen Feldbus (52) jeder der Speicherplatinen (50), wobei jene aus der Vielzahl von Speicherfeldeinheiten (53) jeder der Speicherplatinen (50) mit dem Feldbus (52) der Speicherplatine (50) verbunden ist,
Verarbeiten der Datensignale in einer der Speicherfeldeinheiten (53) gemäß den Befehls- und Daten-Signalen und gleichzeitig mit der Verarbeitung der Datensignale in anderen aus der Vielzahl von Speicherfeldeinheiten (53) der gleichen Speicherplatine (50), und
Erzeugen von Feldstatussignalen in jeder aus der Vielzahl von Speicherfeldeinheiten (53), die die gegenwärtige Verfügbarkeit der zugeordneten Speicherfeldeinheit (53) dafür anzeigen, Datensignale zu verarbeiten; und worin der Schritt des Erzeugens von Platinenstatussignalen den Schritt des Erzeugens von Platinenstatussignalen aus den Feldstatussignalen enthält.

20. Verfahren nach Anspruch 19, worin der Unterschritt des Verarbeitens der Datensignale in einer der Speicherfeldeinheiten (53) weiterhin die folgenden Unterschritte enthält:
zeitweiliges Speichern der Daten- und Adreß-Signale in der einen Speicherfeldeinheit (53), und
Steuern der Verarbeitung der Datensignale in der einen Speicherfeldeinheit (53) in Übereinstimmung mit den Befehls-Signalen.

21. Verfahren nach Anspruch 20, worin die Unterschritte der Erzeugung der Feldstatussignale weiterhin den Unterschritt des Erzeugens der Feldstatussignale enthalten, die den Abschluß einer Verarbeitungsoperation durch die zugeordnete Speicherfeldeinheit (53) anzeigen, und worin der Unterschritt des Erzeugens der Feldstatussignale weiterhin den Unterschritt des Erzeugens der Platinenstatussignale umfaßt, die den Abschluß der Verarbeitungsoperation durch die zugeordnete Speicherplatine (50) anzeigen.

## Revendications

1. Carte de mémoire (50) pour des opérations dans une unité de mémoire principale (15) incluant une pluralité d'autres cartes de mémoire, ladite carte de mémoire (50) comprenant :
- des moyens de stockage pour traiter des signaux de données par le stockage et l'extraction desdits signaux de données en réponse à des signaux d'adresse simultanément avec lesdites autres cartes de mémoire dans ladite unité de mémoire principale (15), lesdits moyens de stockage incluant :
- une pluralité d'unités de zones de mémoire (53) incluant chacune :
- une pluralité de cellules de stockage (532) pour traiter lesdits signaux de données à des emplacements correspondant auxdits signaux d'adresse, et des moyens pour traiter lesdits signaux de données en réponse auxdits signaux d'adresse et d'instruction pour effectuer le stockage desdits signaux de données dans lesdites et l'extraction desdits signaux de données desdites cellules de stockage (532) simultanément avec le traitement desdits signaux de données par d'autres unités desdites unités de zones de mémoire (53), et
caractérisée en ce que
- lesdits moyens de traitement incluent des moyens de séquenceur (531) pour générer des signaux d'état des zones de mémoire incluant au moins un signal "achevé" indiquant la disponibilité imminente de cette unité de zones de mémoire (53) pour traiter lesdits signaux de données; ladite carte de mémoire (50) comprenant de plus :
- des moyens d'interface de carte (51) incluant une unité d'interface des zones de mémoire (510) pour générer des signaux d'état de la carte à partir desdits signaux "achevé", lesdits signaux d'état de la carte incluant :
- des signaux "prêt/achevé" générés préalablement au moment où lesdites cellules de stockage (532) ont achevé leurs opérations de traitement et indiquant l'achèvement imminent du traitement de signaux de données par lesdits moyens de stockage, et
- des signaux "pas d'envoi d'instruction" indiquant la disponibilité de ladite carte de mémoire (50) pour traiter lesdits signaux de données; et
- des moyens de bus des zones de mémoire (52) couplés à ladite pluralité d'unités de zones de mémoire (53) pour transférer lesdits signaux d'instruction, de données et d'adresse et lesdits signaux "achevé" entre ladite unité d'interface des zones de mémoire (510) et chaque unité de ladite pluralité d'unités de zones de mémoire (53).

2. Unité de mémoire principale (15) incluant au moins une carte de mémoire (50) selon la revendication 1, pour traiter des signaux de données par le stockage et l'extraction desdits signaux de données en réponse à des demandes provenant d'au moins une unité de traitement de données (10) qui génère des signaux d'instruction et des signaux d'adresse faisant partie desdites demandes vers ladite unité de mémoire principale (15) et qui reçoit des signaux d'état de la mémoire provenant de ladite unité de mémoire principale (15) indiquant la disponibilité de ladite unité de mémoire principale (15) à traiter lesdits signaux de données, ladite unité de mémoire principale (15) comprenant :
- des moyens de l'unité d'interface de la mémoire (40), couplés audit système de traitement de données, pour former lesdits signaux d'état de la mémoire à partir desdits signaux d'état des cartes et pour échanger lesdits signaux de données, d'instruction, d'état de la mémoire et d'adresse avec l'unité de traitement de données 10; et
- un bus de l'unité de mémoire (32), couplé à ladite unité d'interface de la mémoire (40), pour transférer lesdits signaux d'adresse, de données, d'état des cartes et d'instruction avec lesdits moyens de l'unité d'interface de la mémoire (40) et ladite au moins une carte de mémoire (50), couplée audit bus de l'unité de mémoire (32) et sensible auxdits signaux d'instruction.

3. Unité de mémoire principale (15) selon la revendication 2, dans laquelle chacun des moyens d'interface de carte (51) est couplé entre ledit bus de l'unité de mémoire (32) et ledit bus des zones de mémoire (52), pour former lesdits signaux d'état de la carte pour une carte de mémoire (50) associée à partir desdits signaux d'état des zones de mémoire.

4. Unité de mémoire principale (15) selon la revendication 2, dans laquelle chacune desdites unités de zones de mémoire (53) inclut :
- ladite pluralité de cellules de stockage (532);
- des moyens de tampon (533), (534) et (535), couplés entre ladite pluralité de cellules de stockage (532) et ledit bus des zones de mémoire (52), pour fournir un stockage temporaire desdits signaux de données (533, 535) et desdits signaux d'adresse (534); et
- des moyens de séquenceur (531), couplés entre ledit bus des zones de mémoire (52) et ladite pluralité de cellules de stockage (532), pour contrôler le traitement desdits cellules de stockage (532) en accord avec lesdits signaux d'instruction reçus à partir dudit bus des zones de mémoire (52) et pour fournir lesdits signaux d'état des zones de mémoire audit bus des zones de mémoire (52).

5. Unité de mémoire principale (15) selon la revendication 3, dans laquelle lesdits moyens d'interface de carte (51) incluent des moyens (510-513) pour stocker temporairement lesdits signaux d'adresse, d'instruction, de données et d'état de la carte.

6. Unité de mémoire principale (15) selon la revendication 2, dans laquelle lesdits moyens de l'unité d'interface de la mémoire (40) incluent :
- des moyens de tampon de données (402, 403) pour stocker temporairement lesdits signaux de données;
- des moyens de tampon d'adresse (420) pour stocker temporairement lesdits signaux d'adresse;
- des moyens de tampon d'instruction (412) pour stocker temporairement lesdits signaux d'instruction; et
- des moyens pour traiter lesdits signaux d'état de la mémoire selon lesdits signaux d'état des cartes.

7. Unité de mémoire principale (15) selon la revendication 2, dans laquelle lesdits moyens d'interface des zones de mémoire (510) sont adaptés pour recevoir des signaux d'instruction provenant dudit bus de l'unité de mémoire (32).

8. Unité de mémoire principale (15) selon la revendication 2, comprenant de plus des première et deuxième unités de zones de mémoire (53), dans laquelle chacune desdites première et deuxième unités de zones de mémoire comprend des moyens pour écrire simultanément des groupes de signaux de données dans les cellules de stockage (532) desdites première et deuxième unités des zones de mémoire.

9. Système de traitement de données incluant au moins une unité de mémoire principale selon l'une quelconque des revendications 2 à 6, et comprenant de plus un bus du système (19), dans lequel ladite au moins une unité de traitement de données (10) est couplée à ladite unité de mémoire principale (15) via ledit bus du système (19).

10. Système de traitement de données selon la revendication 9, dans lequel ladite au moins une carte de mémoire (50) inclut une première carte de mémoire où les moyens de zones de mémoire (53) fonctionnent à une première vitesse et une deuxième carte de mémoire où les moyens de zones de mémoire fonctionnent à une deuxième vitesse, ladite deuxième vitesse étant différente de ladite première vitesse.

11. Système de traitement de données selon la revendication 9, dans lequel lesdits moyens de l'unité d'interface de la mémoire (40) transmettent un signal d'occupation audit bus du système (19) lorsque ladite unité de mémoire (15) est incapable de traiter des données d'entrée.

12. Système de traitement de données selon l'une quelconque des revendications 9 à 11, dans lequel ledit bus du système (19) est adapté pour transférer des signaux de données, d'adresse, d'état de la mémoire et d'instruction, utilisés dans ledit système de traitement de données.

13. Système de traitement de données selon la revendication 12, dans lequel lesdites unités de zones de mémoire (53) sont configurées pour stocker des groupes desdits signaux de données, lesdits groupes desdits signaux de données ayant le même nombre de bits que ledit bus du système (19).

14. Système de traitement de données selon la revendication 12, dans lequel lesdites données sont stockées à des emplacements dans lesdites unités de zones de mémoire (53) correspondant auxdits signaux d'adresse, et dans lequel des emplacements consécutifs desdits emplacements sont répartis sur ladite pluralité d'unités de zones de mémoire (53).

15. Système de traitement de données selon la revendication 12, dans lequel ladite unité d'interface de la mémoire (40) inclut aussi des moyens de détection et de correction d'erreurs (404) pour détecter et corriger des erreurs dans lesdits signaux de données.

16. Système de traitement de données selon la revendication 12, incluant de plus une unité d'entrée/sortie (13) couplée audit bus du système (19) pour générer des signaux d'instruction et d'adresse pour ladite unité de mémoire principale (15) et pour transférer lesdits signaux de données avec ladite unité de mémoire principale (15).

17. Système de traitement de données selon la revendication 12, dans lequel ladite au moins une unité de traitement de données inclut une première unité centrale de traitement (10) et une deuxième unité centrale de traitement (11), toutes deux couplées audit bus du système (19).

18. Procédé pour traiter des signaux de données dans une unité de mémoire principale (15) d'un système de traitement de données par le stockage et l'extraction desdits signaux de données, le procédé comprenant les étapes de :
- génération de signaux d'instruction et d'adresse par ladite unité de traitement de données (10), devant être traités dans ladite unité de mémoire principale (15) et échange desdits signaux de données, d'instruction et d'adresse avec ladite unité de mémoire principale (15) via un bus du système (19).
- transfert via une unité d'interface de la mémoire (40) desdits signaux de données, d'instruction et d'adresse entre ledit bus du système (19) et un bus de l'unité de mémoire (32);
- transfert desdits signaux de données, d'instruction et d'adresse entre ledit bus de mémoire (32) et au moins une carte de mémoire (50);
ledit procédé étant caractérisé par :
- le traitement desdits signaux de données dans ladite au moins une carte de mémoire (50) selon lesdits signaux d'instruction et de données, et simultanément avec toute autre carte de mémoire (50) dans ladite unité de mémoire principale (15) autre que ladite au moins une carte de mémoire (50);
- la génération de signaux d'état de la carte dans chacune desdites cartes de mémoire (50) incluant un signal "prêt/achevé", généré préalablement au moment où lesdites moyens de traitement dudit système de stockage ont achevé leurs opérations de traitement et indiquant l'achèvement imminent des opérations de traitement par lesdits moyens de traitement dudit système de stockage, et des deuxièmes signaux indiquant la disponibilité actuelle de la carte de mémoire associée pour traiter lesdits signaux de données;
- le transfert desdits signaux d'état de la carte à ladite unité d'interface de la mémoire (40);
- la formation de signaux d'état de la mémoire dans ladite unité d'interface de la mémoire (40) à partir desdits signaux d'état des cartes, lesdits signaux d'état de la mémoire indiquant la disponibilité de l'unité de mémoire principale (15) pour traiter lesdits signaux de données; et
- le transfert desdits signaux d'état de la mémoire provenant de ladite unité d'interface de la mémoire (40) à ladite unité de traitement de données (10).

19. Procédé selon la revendication 18, dans lequel l'étape de traitement desdits signaux de données dans ladite carte de mémoire (50) inclut les étapes secondaires de :
- transfert desdits signaux d'instruction, de données et d'adresse en une pluralité d'unités de zones de mémoire (53) dans chacune desdites cartes de mémoire (50) via un bus des zones de mémoire (52) dans chacune desdites cartes de mémoire (50), chaque unité de ladite pluralité d'unités de zones de mémoire (53) dans chacune desdites cartes de mémoire (50) étant couplée au bus des zones de mémoire (52) dans cette carte de mémoire (50),
- traitement desdits signaux de données dans une desdites unités de zones de mémoire (53) selon lesdits signaux d'instruction et de données, et simultanément avec le traitement desdits signaux de données dans d'autres unités de ladite pluralité d'unités de zones de mémoire (53) dans la même carte de mémoire (50), et
- génération, dans chaque unité de ladite pluralité d'unités de zones de mémoire (53), de signaux d'état des zones de mémoire indiquant la disponibilité actuelle de l'unité de zones de mémoire (53) associée pour traiter lesdits signaux de données; et dans lequel l'étape de génération desdits signaux d'état de la carte inclut l'étape de formation desdits signaux d'état de la carte à partir desdits signaux d'état des zones de mémoire.

20. Procédé selon la revendication 19, dans lequel l'étape secondaire de traitement desdites signaux de données dans une desdites unités de zones de mémoire (53) inclut de plus les étapes secondaires de :
- stockage temporaire desdits signaux de données et d'adresse dans ladite une unité de zones de mémoire (53); et
- contrôle du traitement desdits signaux de données dans ladite une unité de zones de mémoire (53) en accord avec lesdits signaux d'instruction.

21. Procédé selon la revendication 20, dans lequel l'étape secondaire de génération desdits signaux d'état des zones de mémoire inclut de plus l'étape secondaire de génération desdits signaux d'état des zones de mémoire pour indiquer l'achèvement d'une opération de traitement par l'unité de zones de mémoire (53) associée; et
dans lequel l'étape secondaire de génération desdits signaux d'état de la carte inclut de plus l'étape secondaire de génération desdits signaux d'état de la carte pour indiquer l'achèvement d'une opération de traitement par ladite carte de mémoire (50) associée.
